# EUROPÄISCHE PATENTSCHRIFT

(11) **EP 0 930 930 B1**
(45) Veröffentlichungstag und Bekanntmachung des Hinweises auf die Patenterteilung: **15.05.2002**
(21) Anmeldenummer: 97910360.3
(22) Anmeldetag: 25.09.1997
(51) Int. Cl.: B01D 53/94, F01N 3/08, F01N 3/20, F01D 21/08

(54) **NOx-ABGASREINIGUNGSVERFAHREN**
PROCESS FOR REMOVING NOx FROM EXHAUST FUMES
PROCEDE D'EPURATION DE GAZ D'ECHAPPEMENT CONTENANT DU NOx

(30) Priorität: 28.09.1996 DE 19640161
(43) Veröffentlichungstag der Anmeldung: 28.07.1999
(73) Patentinhaber: Volkswagen Aktiengesellschaft, 38436 Wolfsburg (DE)
(72) Erfinder: POTT, Ekkehard, D-38518 Gifhorn (DE)
(86) Internationale Anmeldenummer: EP9705268
(87) Internationale Veröffentlichungsnummer: WO9813128

(56) Entgegenhaltungen:
- EP-A- 0 560 991
- EP-A- 0 573 672
- EP-A- 0 581 279
- EP-A- 0 597 106
- EP-A- 0 627 548
- EP-A- 0 664 147

## Beschreibung

Die Erfindung betrifft ein Abgasreinigungsverfahren für eine Brennkraftmaschine gemäß dem Oberbegriff des Patentanspruchs 1 sowie eine Brennkraftmaschine gemäß Anspruch 26.

Aus der DE 195 22 913 A ist eine fremdgezündete Brennkraftmaschine bekannt, die in ihrem Abgasstrang einen Vorkatalysator und einen Hauptkatalysator enthält. Der Hauptkatalysator ist als üblicher Drei-Wege-Katalysator ausgebildet, dessen Washcoat Cer enthält, das als Sauerstoffspeicher dient. Der Vorkatalysator enthält stromaufwärts eine Zone, die im Washcoat kein Cer enthält. Die katalytische Beschichtung der cerfreien Zone ist Palladium, gefolgt von einer üblichen Drei-Wege-Katalysator-Beschichtung Platin/Rhodium. Die Brennkraftmaschine wird mit einem stöchiometrischen Gemisch betrieben, d. h. λ = 1. Mit der hier beschriebenen katalytischen Beschichtung wird erreicht, daß der Katalysator gegenüber um λ = 1 sehr schnell schwankenden, tatsächlichen fetten und mageren Abgasbedingungen, stabiler ist. Dieses Abgasreinigungsprinzip ist nicht auf magerbetriebene Brennkraftmaschinen, wie Magermix-Otto-Motoren und Dieselbrennkraftmaschinen, übertragbar, da diese bekannte Abgasemissionssteuervorrichtung nur bei einem theoretischen Luft-Kraftstoff-Verhäitnis (λ = 1) alterungsstabil ist.

Für Otto-Magermotoren sind weiterhin NOx-Speicherkatalysatoren bekannt, die im mageren Betrieb die Stickoxide zunächst bis zur von der Katalysatorauslegung abhängigen Belastungsgrenze einlagern. Anschließend erfolgt ein kurzer stöchiometrischer oder leicht fetter Betrieb zur Regeneration des NOx-Speicherkatalysators, mit nachfolgend wieder magerer Betriebsweise. Der Rückhaltegrad dieser NOx-Speicherkatalysatoren ist sehr hoch, die gesamte NOx-Reduktion mit Speicherentladung und NOx-Umsetzung bei λ ≤ 1 beträgt bei Mager-Ottomotoren im Neuzustand > 90 %. Prinzipiell sind solche NOx-Speicherkatalysatoren auch bei Dieselfahrzeugen einsetzbar, wobei eine gewisse größere Dimensionierung zur Kompensation der SOx-Einlagerungen vorteilhaft ist. Im Gegensatz zu Ottomotoren arbeiten Dieselmotoren jedoch stets mit Luftüberschuß, so daß während allen Betriebszuständen λ > 1 ist. Eine Beladung des NOx-Speicherkatalysators wäre somit zwar problemlos möglich, eine Regeneration durch Anfetten des Abgases mittels beispielsweise Einspritzung von Kraftstoff in den Abgasstrang würde aber einerseits zu einem nicht tolerierbaren Verbrauchsanstieg und andererseits, wegen des hohen Sauerstoffgehalts der Dieselabgase, zu einer hohen Oxidationswärme führen, da vor der Umsetzung des gespeicherten NOx der eingedüste Kraftstoff oxidiert wird. Hierdurch besteht die Gefahr einer Zerstörung des Katalysators.

Aus der DE 43 42 062 A ist eine Abgasreinigungsvorrichtung für Dieselbrennkraftmaschinen bekannt, bei der der NOx-Speicher zur Regeneration vom Abgasstrom abgesperrt wird. Dies geschieht regelmäßig dann, wenn der Speicher seine Kapazität erreicht hat. Um während der Regeneration weiterhin keine NOx-Emissionen zu haben, wird der Abgasstrom über einen zweiten NOx-Speicher geführt. Alternativ wird der Abgasstrom gedrosselt und ein komplizierter Regenerationalgorithmus eingeleitet. Hierbei ist die Funktionssicherheit problematisch. Außerdem bedingt die Verdoppelung des NOx-Speichers einen erheblichen Aufwand, wobei trotz des Aufwands nur bedingt eine gute Abgasreinigung erreicht wird.

Aus der US 4,755,499 ist die reversible Speicherung von Stickoxiden und Schwefeloxiden z. B. aus Abgasen von Kraftfahrzeugen bekannt, wobei der Absorber durch Erhitzen in einer reduzierenden Atmosphäre regeneriert wird. Hierbei tritt gleichzeitig eine Reduktion der Stickoxide ein.

Ein solcher Speicherkatalysator ist in der EP 0 580 389 A für den Einsatz bei Kraftfahrzeugen näher beschrieben, wobei auch hier hohe Temperaturen (über 500 °C) für die Regeneration des Absorbers notwendig sind. Hierdurch ist der Einsatz des Speicherkatalysators nur bei Kraftfahrzeugen möglich, die eine hohe Abgastemperatur haben, d. h. insbesondere bei Kraftfahrzeugen mit einem Otto-Motor. Jedoch ist auch hier der Einsatz nur bedingt möglich, da unter bestimmten Betriebsbedingungen der Verbrennungskraftmaschine, wie sie beispielsweise im Stadtverkehr gegeben sind, durch die Beschleunigungsphasen ein hoher Stickoxidausstoß erfolgt, nicht jedoch eine hohe Temperatur erreicht wird, die für die Regeneration des Absorbers, insbesondere von Schwefeloxiden, erforderlich ist.

Aus der EP 0 560 991 A ist ein Otto-Motor mit einem Speicherkatalysator sowie je einem vor- und nachgeschalteten Dreiwegekatalysator bekannt. Durch die motornahe Anordnung des dem Absorber vorgeschalteten Dreiwegekatalysators heizt sich dieser nach einem Kaltstart des Otto-Motors sehr schnell auf, so daß er frühzeitig seine katalytische Aktivität erreicht. Nach Erreichen seiner katalytischen Aktivität setzt der vorgeschaltete Dreiwegekatalysator die während der Warmlaufphase der Ottobrennkraftmaschine vermehrt vorliegenden HC und CO um, wobei gleichzeitig NOx reduziert wird. Hierdurch wird erreicht, daß während einer Warmlaufphase der Ottobrennkraftmaschine eine NOx-Reduktion im Abgas stattfindet, obwohl der NOx-Speicher noch nicht die für die Speicherung von NOx notwendige Temperatur erreicht hat. Diese Anordnung und Verfahrensweise ist nur bei Otto-Motoren sinnvoll, da Diesel-Motoren auch während der Warmlaufphase nicht genügend CO und HC emittieren, um den NOx-Anteil der Abgase genügend zu reduzieren. Abgesehen von der besseren Abgasreinigung während der Warmlaufphase zeigt der Otto-Motor mit Vorkatalysator keine verbesserte NOx-Reduktion. Des weiteren sind aus dieser Veröffentlichung zwei Verfahren zur NOx-Reduktion bei Dieselbrennkraftmaschinen bekannt, die zum einen auf einer Drosselung der Luftzufuhr zu der Dieselbrennkraftmaschine und zum anderen auf einer Kraftstoffeindüsung beruhen. Dieselbrennkraftmaschinen, die mit solchen NOx-Speichern ausgerüstet sind, zeigen jedoch bei höheren Abgastemperaturen eine deutliche Abnahme der NOx-Speicherung im NOx-Speicher.

Die EP-A-0.664.147 zeigt einen Katalysator zum Reinigen des Abgases einer Brennkraftmaschine mit drei auf einem Träger aufgebrachten Behandlungszonen, nämlich einer ersten Zone mit einer Edelmetallbeschichtung, d.h. zum Umsetzen von NO in NO₂, einer nachfolgenden zweiten Zone zum NOₓ-Speichern und einer letzten dritten Zone mit einer Edelmetallbeschichtung, die als üblicher Drei-Wege-Katalysator funktioniert.

Weiterhin bezieht sich die EP-A-0.573.672 noch auf einen NOₓ-Speicher für Brennkraftmaschineabgase, der mehrere Behandlungszonen auf einem gemeinsamen Trägerkörper enthält. Die Menge von NOₓ-Speichermaterial erniedrigt sich stromabwärts in jeder nachgeschalteten Zone.

All diesen Ausführungen ist gemeinsam, daß insbesondere bei direkteinspritzenden Brennkraftmaschinen und/oder Dieselbrennkraftmaschinen das Fettfahren der Brennkraftmaschine für eine Regeneration des NOx-Speichers oftmals problematisch ist. So kann hierbei die Temperatur der Abgase einerseits zu hoch sein, andererseits kann ein zu hoher Leistungsabfall die Folge sein. Außerdem kann es, je nach Größe des NOx-Speichers, zu Durchschlägen kommen, d. h. in den NOx-Speicher einströmendes NOx wird - obwohl eine genügende Speicherkapazität vorhanden ist - nicht absorbiert bzw. Kohlenwasserstoffe, die zur Regeneration des NOx-Speichers in diesen Strömen, treten teilweise wieder aus dem NOx-Speicher aus.

Aufgabe der vorliegenden Erfindung ist es ein Verfahren zum Betrieb einer Brennkraftmaschine mit einem Absorber für Stickoxide zur Verfügung zu stellen, bei dem der NOx-Speicher eine hohe Affinität für einströmendes NOx und/oder eine hohe Umsetzungsqualität für Regenerations-Kohlenwasserstoffe hat. Mit zur Aufgabe gehört außerdem eine entsprechende Brennkraftmaschine.

Bei dem eingangs beschriebenen Verfahren wird diese Aufgabe gelöst mit den kennzeichnenden Maßnahmen des Anspruchs 1, hinsichtlich der Abgasreinigungsvorrichtung, bzw. der Brennkraftmaschine wird die Aufgabe gelöst mit den Merkmalen gemäß Anspruch 24, bzw. Anspruch 27.

Die Unteransprüche zeigen bevorzugte Ausführungsformen, mit denen insbesondere auch bei sehr niedrigen Abgastemperaturen, wie sie beispielsweise bei direkteinspritzenden Verbrennungskraftmaschinen vorliegen, ein früher Einsatz der Absorberfunktion nach einem Kaltstart möglich ist. Außerdem wird mit den Unteransprüchen auch bei unterschiedlichen Betriebsbedingungen der Brennkraftmaschine eine komfortable Regeneration des NOx-Speichers erreicht. Desweiteren wird mit den Unteransprüchen eine preiswerte und hocheffiziente Umsetzung des NOx und der Kohlenwasserstoffe erreicht.

Gemäß eines ersten Aspekts der vorliegenden Erfindung erhält der NOx-Speicher zumindest über einen vorderen Abschnitt (oder Zone) eine niedrige oder gar keine Edeimetallbeladung. Dieser Zone folgt stromab ein Abschnitt mit einer höheren Edelmetallbeladung, wobei dieser Abschnitt noch auf dem NOx-Speicher und/oder dem NOx-Speicher nachgeschaltet sein kann.

Sofern das Abgas an dem NOx-Speicher über den edelmetallarmen oder -freien Bereich geführt wird, ist es besonderes vorteilhaft, wenn das Abgas zuvor einer NO zu NO₂-Behandlung unterzogen wird. Dies kann, wie weiter unten ausführlich beschrieben, an einem dem NOx-Speicher vorgeschalteten Konverter geschehen und/oder an einer Eingangszone des NOx-Speichers. Zur besseren Ausnutzung der NOx-Speicherkapazität ist das Voransetzen eines Konverters vorzuziehen.

Mit der vorliegenden Erfindung wurde festgestellt, daß ein NOx-Speicher, der eine geringe oder gar keine Edelmetallbeladung hat, eine bessere Chemiesorptionsrate und eine höhere Speicherkapazität hat (bei ansonsten gleichgebliebenen Bedingungen, wie z. B. der Raumgeschwindigkeit).

Diese Abgasbehandlung ist mit einem zweiten Aspekt der vorliegenden Erfindung verbunden, gemäß dem der NOx-Speicher ganz oder zumindest an einem stromaufwärts gelegenen Abschnitt eine niedrige oder gar keine Sauerstoffspeicherfunktion hat, stromabwärts des NOx-Speichers und/oder dem NOx-Speicher nachgeschaltet strömt das Abgas jedoch über einen Sauerstoffspeicher.

Mit dem erfindungsgemäßen Sauerstoffspeicher, der an einem stromabwärts gelegenen Bereich des NOx-Speichers oder diesem nachgeschaltet angeordnet ist, werden CO und HC-Durchschläge bei der Regeneration des NOx-Speichers reduziert oder vermieden. Der Sauerstoffspeicher lagert bei λ > 1 Sauerstoff ein, das er bei λ < 1 wieder abgibt. D. h. sobald fettes Abgas den NOx-Speicher durchdrungen hat und zu dem Sauerstoffspeicher gelangt, wird der gespeicherte Sauerstoff angegeben, wobei gleichzeitig oder anschließend eine Oxidation des CO und HC des fetten Abgases erfolgt. Für diese Oxidation ist eine gewöhnliche Edelmetallbeschichtung, insbesondere eine Platinbeschichtung, ausreichend, vorteilhaft ist eine Drei-Wege-Katalysator-Beschichtung, z. B. Platin/Rhodium. Die Edelmetallbeschichtung ist auf dem Sauerstoffspeicher aufgebracht.

Zwischen dem NOx-Speicher und dem Sauerstoffspeicher ist eine katalytische Edelmetallbeschichtung ohne sauerstoffspeichernde Funktion (bzw. mit einer gegenüber dem Sauerstoffspeicher geringeren sauerstoffspeichernden Funktionen) angeordnet. Diese katalytische Beschichtung hat jedoch weder eine NOx-Speicherfunktion noch eine Sauerstoffspeicherfunktion (zumindest keine wesentliche).

In der bevorzugten Ausführungsform der vorliegenden Erfindung wird das Abgas über mindestens vier funktionale Stationen geschickt mit folgender Reihenfolge:
1. NO zu NO₂-Konverter (Oxidationskatalysator mit hoher Platinbeladung, beispielsweise 2.5 g/l (70g/ft³)),
2. NOx-Speicher ohne oder mit nur geringer Edelmetallbeschichtung und insbesondere ohne oder mit nur geringer Sauerstoffspeicherfähigkeit (beispielsweise Alkali, Erdalkali und/oder Lanthan auf γ-Aluminiumoxid);
3. Edelmetallkatalysator, insbesondere Drei-Wege-Katalysator, ohne oder mit nur geringer NOx- und/oder Sauerstoffspeicherfunktion;
4. Edelmetallkatalysator, insbesondere Drei-Wege-Katalysator mit einer Sauerstoffspeicherfunktion (beispielsweise cerhaltiger Aluminiumoxid-Washcoat).

Von diesen Stationen ist die erste Station vorteilhaft nahe dem Abgasauslaß der Brennkraftmaschine angeordnet, die übrigen Stationen können vorteilhaft zu zweien oder alle drei auf einem gemeinsamen Trägermaterial aufgebracht sein.

Bei der vorliegenden Erfindung hat es sich gezeigt, daß insbesondere bei der Verwendung einer NOx-Speicherzone mit nur geringer oder keiner Edelmetallbeladung eine Raumgeschwindigkeit des Abgases von 50 000/h erreichbar ist, bei der auch beim Einsatz von Turbomotoren noch kein Einbruch bei der Konvertierungsrate erfolgt. Die herkömmlichen NOx-Speicher zeigen bei so hohen Raumgeschwindigkeiten einen deutlichen Einbruch in der NOx-Konvertierungsrate.

Bei dem erfindungsgemäßen NOx-Abgasreinigungsverfahren können übliche NOx-Speicher, wie sie beispielsweise aus US 4,755,499, EP 0 580 389 A und 0 560 991 A bekannt sind, eingesetzt werden. Typischerweise ist bei diesen NOx-Speichern die durchschnittliche Zeitdauer der zweiten Betriebsbedingungen wesentlich kürzer als die der ersten Betriebsbedingungen, d. h. das Abgas ist für einen verhältnismäßig langen Zeitraum (beispielsweise durchschnittlich 10 s bis 5 min) mager und für einen kurzen Zeitraum (beispielsweise 0,1 bis 5 s, insbesondere 0,5 bis 3 s) fett oder bei λ = 1. Der Magerbetrieb erfolgt vorteilhaft mindestens doppelt und insbesondere mindestens dreimal so lange wie der Regenerationsbetrieb.

Bei dem erfindungsgemäßen Abgasverfahren an einer Brennkraftmaschine werden die Abgase der Brennkraftmaschine einem NOx-Speicher zugeführt, der unter ersten Betriebsbedingungen NOx aus dem zugeführten Abgas speichert. Die ersten Betriebsbedingungen sind insbesondere solche, bei denen im Abgas nettooxidierende Bedingungen (λ > 1 und insbesondere λ > 1,1) vorliegen, wobei die Temperatur des Abgasstroms oberhalb 150 °C und insbesondere oberhalb 200 °C liegen soll. Unter zweiten Betriebsbedingungen, die von den ersten Betriebsbedingungen unterschiedlich sind, gibt der NOx-Speicher das gespeicherte NOx wieder ab, wobei dieses insbesondere unmittelbar bzw. sofort reduziert wird. Die zweiten Betriebsbedingungen sind insbesondere solche, bei denen das Abgas eine für die Reduktion der gespeicherten Stickoxide ausreichende Menge an Reduktionsmittel mit sich führt. Dies ist insbesondere bei einem λ (stöchiometrisches Luft-Kraftstoff-Verhältnis) ≤ 1,05 und insbesondere λ ≤ 1,0 der Fall.

Vorteilhaft erfolgt bei dem erfindungsgemäßen Abgasreinigungsverfahren im Gegensatz zum Stand der Technik nicht bloß eine einfache Abfrage der Speicherbeladung oder eines Zeitablaufs, wobei bei Erreichen einer bestimmten Speicherbeladung bzw. nach einem vorgegebenen Zeitablauf eine Regeneration des NOx-Speichers erfolgt. Vielmehr wird erfindungsgemäß eine Abfrage des Zustandes der Brennkraftmaschine durchgeführt, wobei die Regeneration (d. h. Einstellen der zweiten Betriebsbedingungen) gezielt dann erfolgt, wenn eine niedrige Belastung und/oder eine Schubphase und/oder eine Leerlaufphase der Brennkraftmaschine vorliegt. Besonders vorteilhaft ist die Regeneration im Schubbetrieb, gefolgt vom Leerlaufbetrieb und geringer vorteilhaft bei der niedrigen Belastung der Brennkraftmaschine. Im Schubbetrieb der Brennkraftmaschine kann die Regeneration ohne jegliche Komforteinbußen erfolgen, da hier der Brennkraftmaschine keine Leistung abverlangt wird. Auch im Leerlaufbetrieb ist das Einstellen der zweiten Betriebsbedingungen relativ unproblematisch, da hier der Brennkraftmaschine ebenfalls keine Vortriebsleistung abverlangt wird; durch das Einstellen der zweiten Betriebsbedingungen kann es jedoch zu einer leichten Veränderung der Leerlaufdrehzahl der Brennkraftmaschine kommen. Auch bei niedrigen Leistungen der Brennkraftmaschine ist noch eine komfortable Regeneration des NOx-Speichers möglich, da mit dem Vorliegen der zweiten Betriebsbedingungen noch niedrige Leistungswerte der Brennkraftmaschine eingestellt werden können, so daß auch hier praktisch kein für den Fahrer eines Kraftfahrzeuges merklicher Leistungseinbruch der Brennkraftmaschine vorliegt.

Entsprechend der oben genannten vorteilhaften Rangfolge der einzelnen Phasen der Brennkraftmaschine beim Erstellen der zweiten Betriebsbedingungen, kann das Einstellen der zweiten Betriebsbedingungen hinsichtlich der einzelnen Phasen auch gewichtet werden. So kann beispielsweise der Regeneration eine Zeitsteuerung und/oder eine Abhängigkeit vom NOx-Ausstoß der Brennkraftmaschine (d.h. dem NOx-Speichergrad des NOx-Speichers) überlagert werden. Dies bedeutet, daß die zweiten Betriebsbedingungen nur dann eingestellt werden, wenn die ersten Betriebsbedingungen eine bestimmte, vorgegebene Zeit vorlagen bzw. wenn eine bestimmte prozentuale Speicherbelegung vorliegt. Hierbei kann wiederum die Zeitspanne oder die prozentuale NOx-Belegung des NOx-Speichers für den Schubbetrieb geringer sein, als bei den anderen Betriebsphasen der Brennkraftmaschine.

Je nach Einsatz eines Kraftfahrzeugs mit dem erfindungsgemäßen Abgasreinigungsverfahren ist es möglich, daß die Regeneration des NOx-Speichers ausschließlich in Schub-, Leertauf- und Teillastphasen erfolgen kann. Sofern jedoch langanhaltende Hochlastphasen der Brennkraftmaschine vorliegen, z. B. bei einer Autobahnfahrt, kann ggf. auch eine Regeneration außerhalb der günstigen Betriebszustände erfolgen, wenn der NOx-Speicher eine bestimmte NOx-Belegung, von beispielsweise ≥ 80 % und insbesondere ≥ 90 % erreicht hat. Hierbei kann es jedoch je nach Art der Brennkraftmaschine und der zweiten Betriebsbedingungen zu einem spürbaren Abfall der Leistung der Brennkraftmaschine kommen.

Als niedrige Belastung der Brennkraftmaschine gilt vorteilhaft eine Belastung bis 20 % der Nennleistung der Brennkraftmaschine und insbesondere bis 10 % der Nennleistung. Außerdem wird während den zweiten Betriebsbedingungen vorteilhaft die Luftzufuhr zu der Brennkraftmaschine vermindert, insbesondere durch eine Drosselung im Luftansaugkanal. Dies ist bei fremdzündenden wie auch selbstzündenden Brennkraftmaschinen möglich, wobei das erfindungsgemäße Verfahren wiederum insbesondere bei selbstzündenden Brennkraftmaschinen besonders vorteilhaft anwendbar ist, ohne daß ein zweiter NOx-Speicher für einen Wechselbetrieb vorgesehen werden muß, wie es aus der DE 43 42 062 bekannt ist.

Das erfindungsgemäße Verfahren ist vorteilhaft mit einer Abgasrückführung ausgestattet, die entsprechend den ersten bzw. den zweiten Betriebsbedingungen unterschiedliche Abgasrückführungsraten hat. Die Abgasrate kann hier außerdem noch, auch unter den zweiten Betriebsbedingungen, lastabhängig verändert werden.

In einer ersten Ausführungsform, die ganz besonders vorteilhaft ist, wird bei einem Wechsel von einer ersten Betriebsbedingung (Magerbetrieb der Brennkraftmaschine) in eine zweite Betriebsbedingung (Regenerieren des NOx-Speichers) das Volumenverhältnis rückgeführter Abgasstrom : Ansaugluft vergrößert, so daß der Sauerstoffanteil im Brennraum der Brennkraftmaschine stark zurückgeht. Dem Anstieg des prozentualen Volumenanteils des rückgeführten Abgasstroms an der gesamt Ansaugmenge sind Grenzen gesetzt, einerseits, daß überhaupt noch eine Verbrennung des Kraftstoffes in dem Brennraum der Brennkraftmaschine stattfinden kann, und andererseits durch eine Rußentstehung. Je nach Betriebsbedingungen der Brennkraftmaschine kann jedoch der Volumenanteil des rückgeführten Abgasstromes bis zu 90 % betragen, im Regelfall bis 80 %. Andererseits ist der prozentuale Volumenanteil des rückgeführten Abgasteilstromes vorteilhaft nicht zu gering, damit eine deutliche Reduzierung des Sauerstoffanteils im Brennraum erreicht wird. So sollte der Abgasanteil 15 % und insbesondere 30 % nicht unterschreiten. Am günstigsten liegt der Abgasanteil im Brennraum bei 40 bis 70 %.

Durch die Anhebung des Abgasanteils bei der Verbrennung wird erreicht, daß für die Regeneration des Speichers keine oder nur eine geringere Androsselung notwendig wird, um zu der reduzierten Sauerstoffmenge im Verbrennungsraum zu kommen. Dies ist insbesondere bei Dieselbrennkraftmaschinen besonders vorteilhaft, da hier ein fettes Gemisch sich bislang - auch bei einer Androsselung der Luftzufuhr - kaum einstellen ließ.

Die Anhebung der Abgasrückführungsrate (EGR) erfolgt ganz besonders vorteilhaft in einem unteren Teillastbereich der Brennkraftmaschine, insbesondere unterhalb 20 % der Nennleistung der Brennkraftmaschine. Ganz besonders wirksam ist diese Art der Abgasrückführungsregelung bei einer Belastung der Brennkraftmaschine bis 10 % der Nennleistung. Bei höheren Lasten der Brennkraftmaschine kann hingegen eine Verringerung der rückgeführten Abgasmenge sinnvoll sein, insbesondere um einem Leistungsabfall der Brennkraftmaschine entgegenzuwirken.

Der zuletzt beschriebene Aspekt führt zu einer zweiten Ausführungsform, bei der bei einem Wechsel von einer ersten Betriebsbedingung zu einer zweiten Betriebsbedingung die rückgeführte Abgasmenge vermindert wird. Dies erfolgt gleichzeitig beim Einsatz einer Luftzufuhrverminderung zu der Brennkraftmaschine, so daß insgesamt der Füllungsgrad der Brennräume der Brennkraftmaschine zurückgenommen wird. Das zweite erfindungsgemäße Verfahren zeichnet sich dadurch aus, daß der Leistungseinbruch, der durch die Reduzierung der Frischluftzufuhr zu der Brennkraftmaschine erfolgt, nicht so ausgeprägt vorliegt. Dies ist wiederum insbesondere bei Dieselbrennkraftmaschinen besonders vorteilhaft.

Zusätzlich zur EGR kann die NOx-Reduzierung erheblich gesteigert werden, wenn dem NOx-Speicher stromaufwärts im Abgasstrom ein Konverter vorgeschaltet wird, der bei einer Temperatur ≥ 230 °C mindestens 50 % des im Abgasstrom enthaltenen NO zur NO₂ umsetzt. Vorzugsweise erreicht der Konverter diesen Umsetzungsgrad bereits bei einer Temperatur ≥ 200°C und insbesondere bei der Temperatur ≥ 180 °C. Üblicherweise erreichen solche Konverter eine mindestens 90-%ige Umsetzung des NO bei einer Temperatur ≥ 250 °C.

Alternativ, aber insbesondere zusätzlich wird mit dem Konverter ein in den Abgasen der Brennkraftmaschine vorliegendes NO₂/NO-Verhältnis vergrößert, wodurch dem nachfolgenden Speicher insbesondere in der Warmlaufphase der Brennkraftmaschine weniger NO zugeführt wird.

Für solche NOx-Behandlungen eignen sich alle Verfahren, die eine Vergrößerung des NO₂-Anteils an den Stickoxiden bewirken, beispielsweise elektrische Entladungen im Abgassystem, bevorzugt Barriereentladungen, sowie katalytische Verfahren, insbesondere Oxidationskatalysatoren. Unter diesen sind insbesondere Oxidationskatalysatoren mit einem Element der Platingruppe und hier wiederum Platin selbst besonders bevorzugt. Solche Katalysatoren sind prinzipiell als Abgasnachbehandlungskatalysatoren für Brennkraftmaschinen bekannt.

Vorteilhaft ist der Konverter nahe am Abgasauslaß der Brennkraftmaschine angeordnet, d. h. vorteilhaft in einem Abstand ≤ 1 m und insbesondere in einem Abstand ≤ 70 cm.

Besonders vorteilhaft ist der Konverter als Metallkonverter ausgeführt, d. h. der Träger für die katalytisch wirksame Schicht wird aus einer Metallfolie hergestellt. Bevorzugt wird hierbei eine Metallfolie mit einer Dicke von ≤ 50 µm und insbesondere mit einer Dicke von ≤ 40 µm eingesetzt, wodurch ein besonders schnelles Aufheizen des Konverters auf seine Betriebstemperatur gewährleistet ist. Außerdem hat es sich erfindungsgemäß herausgestellt, daß der Konverter vorzugsweise ein Gesamtvolumen von 10 bis 25 % und insbesondere von 15 bis 20 % des Motorhubraums der Brennkraftmaschine aufweist, da sich bei diesem Verhältnis optimale NOx-Reinigungswerte erzielen lassen. Weiterhin hat der Konverter vorzugsweise eine Platinbeladung von ≥ 2.1 g/l (60 g/ft³). Der Absorptionsspeicher hat hingegen vorteilhaft eine niedrigere Platinbelegung, d.h. insbesondere mit ≤ 1,8 g/l (50 g/ft³) Platin.

Erfindungsgemäß können die üblichen absorbierenden Materialien eingesetzt werden, wie sie beispielsweise in der US 4,755,499, aber auch in der EP 0 580 389 A oder WO 94-04258 beschrieben sind. All diesen Speichermaterialien ist gemeinsam, daß sie eine erhöhte Arbeitstemperatur haben, wobei insbesondere beim Regenerieren (insbesondere beim Entfernen der Schwefeloxide) eine noch höhere Temperatur erforderlich ist. Bei den meisten Speichermedien dieser Art werden Temperaturen im Bereich von 150 °C bis 700 °C, insbesondere Temperaturen oberhalb 300 °C benötigt.

Die bevorzugten NOx-Speichermaterialien zeichnen sich also dadurch aus, daß sie unter nettooxidierenden Bedingungen (stöchiometrischer Überschuß an Oxidationsmitteln), wie sie im Abgas vorliegen, Stickoxide zwischenspeichern und bei einer Verringerung des Sauerstoffüberschusses reduzieren können. Hierzu können die NOx-Speicherkatalysatoren, wie eingangs beschrieben, auch edelmetallbeschichtet sein, insbesondere mit den üblichen Edelmetallbeschichtungen für Dreiwegekatalysatoren. Die Regeneration des mit NOx beladenen Speichermaterials erfolgt dann vorteilhaft bei λ ≤ 1 in einer Regenerierphase.

Üblicherweise laufen an den NOx-Speicherkatalysatoren verschiedene Reaktionen nacheinander bis gleichzeitig ab, wobei die wichtigsten Reaktionen
- Oxidation des NO im Abgas zur NO₂
- Speicherung des NO₂ als Nitrat
- Zersetzung des Nitrats
- Reduktion des zurückgebildeten NO₂ zu Stickstoff und Sauerstoff sind.

Wie oben beschrieben, ist der Verlauf der Reaktionen unter anderem abhängig von der Temperatur des Katalysators, aber auch von der Konzentration der Reaktionspartner am aktiven Zentrum des Katalysators und der Strömungsgeschwindigkeit des Gases.

Mit verschiedenen Faktoren, die miteinander kombinierbar sind, ist es auch mit nur geringem Aufwand möglich, den Abgasabsorber zu optimieren, insbesondere für direkteinspritzende Dieselkraftmaschinen. Die wesentlichen Merkmale sind hierbei:
- Verringerung der Wandstärke des Trägerkörpers, auf dem die Absorptionsschicht aufgebracht ist, auf ≤ 160 µm, insbesondere ≤ 140 µm;
- Verwendung von Metallträgern, vorteilhaft mit einer Wandstärke ≤ 50 µm, vorzugsweise ≤ 40 µm und insbesondere ≤ 30 µm; und/oder
- Heizen des Absorbers auf eine Temperatur oberhalb der Temperatur des Abgasstromes.

Es hat sich gezeigt, daß bei der Verwendung dünnwandiger keramischer Träger für die Absorptionsschicht, d. h. insbesondere von Trägerkörpern mit einer Wandstärke ≤ 0,14 mm, nicht nur ein schnellerer Temperaturanstieg der Absorptionsschicht möglich ist, sondern auch eine dickere Absorptionsschicht eingesetzt werden kann. Hierdurch wird zweierlei erreicht: zum einen können auch kurze Hochtemperaturphasen zum Regenerieren ausgenutzt werden, da die Speicherschicht schneller die höhere Temperatur annimmt, und zum anderen kann durch Auftragen einer dickeren Absorptionsschicht eine höhere Speicherkapazität erreicht werden, so daß über die längere Speicherfähigkeit des Absorbers beim Betrieb der Verbrennungskraftmaschine eine längere Zeitspanne verstreichen kann, bis der Speicher zu Regenerieren ist, so daß trotz der seltener auftretenden Temperaturspitzen im Abgasstrom von verbrauchsoptimierten Verbrennungskraftmaschinen kein Durchschlagen des Speichers (Erreichen der Sättigungsgrenze) erfolgt.

Insbesondere Absorber mit einem Trägerkörper aus Metallfolie sind geeignet, wobei die Metallfolie vorteilhaft noch als Widerstandsheizung geschaltet werden kann, so daß auch bei niedrigen Abgastemperaturen der Absorber auf die notwendige Regenerationstemperatur durch Leiten eines elektrischen Stromes durch den Metallträgerkörper gebracht werden kann. Außerdem lassen sich bei der Verwendung eines Metallträgerkörpers die Kanäle, die mit der Absorptionsschicht beschichtet sind, unterschiedlich gestalten, so daß beispielsweise eine Verwirbelung (turbulente Strömung) des Abgasstromes in den Kanälen gezielt einstellbar ist.

Für die Erzielung besonders guter Umsätze hat die Absorptionsschicht eine vergrößerte Oberfläche von mindestens 20 m²/g, insbesondere mindestens 40 m²/g. Vorteilhaft hat die Absorptionsschicht vorzugsweise ein Porenvolumen von mindestens 0,2cm³/g und insbesondere mindestens 0,4cm³/g, wobei auch eine bimodale Porengrößenverteilung geeignet ist mit Mikroporen und Makroporen. Dies wird beispielsweise durch die Wahl einer bestimmten Partikelgröße für die Bildung der Absorberoberfläche erreicht, wobei auch Mischungen oder bestimmte Verteilungen unterschiedlicher Partikelgrößen geeignet sind.

Als Absorptionsoberfläche eignet sich insbesondere γ-Aluminiumoxid, das mit einem oder mehreren Elementen aus der Gruppe der Alkalimetalle, Erdalkalimetalle, seltenen Erden und/oder Lanthan beladen ist. Auch Kupfer und Mangan sind geeignete Elemente. Die Elemente liegen üblicherweise als Oxid, aber auch als Carbonat oder Nitrat vor, wobei die Speicherwirkung durch Bildung entsprechender Nitrate und Sulfate erzielt wird, die dann unter den entsprechenden Reaktionsbedingungen wieder zu Oxiden oder Carbonaten überführt werden. Hierdurch ist es möglich, NOx und/oder SOx insbesondere aus einem Abgas, das mindestens 1 % Sauerstoff enthält, zu absorbieren.

Wie beschrieben, werden die absorbierten Stoffe insbesondere durch erhöhte Temperaturen und in reduzierender Atmosphäre wieder freigesetzt. Hierzu ist es vorteilhaft, wenn im Abgas die Sauerstoffkonzentration ermittelt wird, wobei dann die Sauerstoffkonzentration oder eine mit der Sauerstoffkonzentration in bekannter Beziehung stehende Größe zur Steuerung des Absorptions- bzw. Desorptionsvorganges herangezogen werden kann. Entsprechendes gilt auch für die Temperatur des Abgasstroms, wobei entscheidend die Temperatur der Absorptionsschicht ist, die unmittelbar oder mittelbar bestimmt wird. So kann die Temperatur beispielsweise durch Messung der Temperatur des Abgasstroms bzw. des Trägerkörpers gemessen werden; auch eine Temperaturbestimmung über ein Kennfeld der Verbrennungskraftmaschine ist möglich.

Vorzugsweise werden die Absorptionsschichten in einer Dicke von mindestens 50 µm, insbesondere mindestens 70 µm und besonders vorteilhaft mindestens 90 µm hergestellt (durchschnittliche Schichtdicke eines Querschnitts; Werte gelten für Keramik, bei Metall gelten die halben Werte) wobei sich diese Schichtdicke der Absorptionsschicht über vorzugsweise mindestens 50 % und insbesondere mindestens 80 % des Absorbers erstreckt. Solche Schichtdicken ermöglichen gegenüber den herkömmlichen Absorbern eine höhere Speicherkapazität und damit die oben beschriebenen längeren Intervalle bis zur Regeneration.

Da für die Freisetzung und Umsetzung des NOx aus dem Speicher und die Freisetzung der Schwefeloxide aus dem Speicher unterschiedliche Temperaturen notwendig sind (beim letzteren höhere), kann außerdem so verfahren werden, daß eine Desorption der Schwefeloxide (die insbesondere als Sulfat vorliegen) in größeren Zeitspannen bzw. bei Bedarf vorgenommen wird, so daß der Speicher nur gelegentlich auf die hohen Temperaturen erhitzt wird, die für eine Desorption der Schwefeloxide notwendig sind. Auch hierdurch wird einer frühzeitigen Alterung des Speichers entgegengewirkt, so daß eine besonders gute Langzeitstabilität des Absorbers erreicht wird.

Die mit zur Erfindung gehörende Brennkraftmaschine mit einer Abgasreinigung enthält vorteilhaft die oben beschriebenen Merkmale.

Die Erfindung wird im folgenden anhand eines Ausführungsbeispiels und Zeichnungen näher beschrieben.

Es zeigen:
- Figur 1: eine Dieselbrennkraftmaschine mit Abgasreinigung und Abgasrückführung;
- Figur 2: ein Blockschaltbild zur Regeneration eines NOx-Speicherkatalysators;
- Figur 3: eine Schnittdarstellung der NOx-Speicherkatalysatoroberfläche als Prinzipskizze; und
- Figur 4: ein Diagramm einzelner Motorcharakteristika.

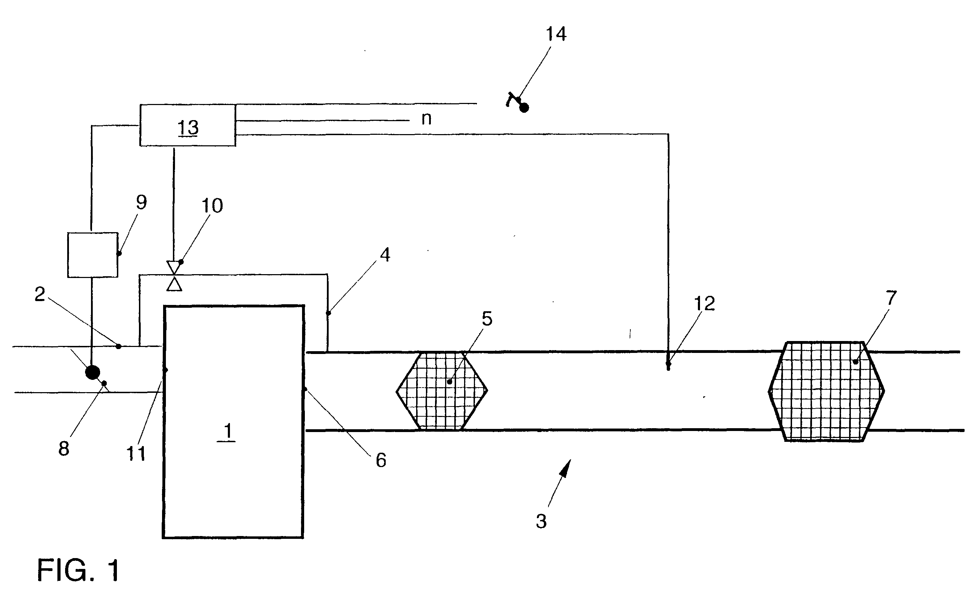

Die in der Figur 1 dargestellte Brennkraftmaschine 1 (1,91, 4 Zyl., Dieseldirekteinspritzer, 66 kW) hat einen Lufteinlaßkanal 2 und eine Abgasanlage 3. Von der Abgasanlage 3 führt eine Abgasrückführungsleitung 4 zu dem Lufteinlaßkanal 2, mittels der insgesamt eine Reduzierung der NOx-Rohemissionen erfolgt.

In der Abgasaniage 3 ist motornah ein Konverter 5 angeordnet, der ein Volumen von 15 % des Hubraums der Dieselbrennkraftmaschine 1 hat. Der Abstand zwischen dem Abgasauslaß 6 und dem Konverter 5 beträgt ca. 20 cm. Außerdem ist in der Abgasanlage 3 ca. 70 cm nach dem Konverter 5 ein üblicher NOx-Speicherkatalysator 7 angeordnet, nach dem die Abgase ins Freie gelangen.

Der Konverter 5 hat einen Metallfolienträgerkörper, auf dem ein γ-Aluminiumoxid-Washcoat mit einer Platinbeladung von 70 g/ft³ aufgetragen ist. Der NOx-Speicherkatalysator ist aus einem wabenförmigen Keramikträger aufgebaut, auf dem ein γ-Aluminiumoxid-Washcoat, der weiter unten näher beschrieben ist, aufgebracht ist.

in dem Lufteinlaßkanal 2 ist stromauf der Einmündung der Abgasrückführungsleitung 4 eine Drosselklappe 8 angeordnet, die mittels eines Stellmotors 9 zu öffnen und verschließbar ist.

In der Abgasrückführungsleitung 4 sitzt ein Stellventil 10, über das die von der Abgasanlage 3 zu dem Lufteinlaß 11 der Brennkraftmaschine 1 zurückgeführte Abgasmenge kontrollierbar ist.

Ferner ist vor dem NOx-Speicher 7 in die Abgasanlage 3 eine Breitbandlambdasonde 12 eingeführt, über die ermittelbar ist, ob das Abgas in der Abgasanlage 3 sauerstoffhaltig, ausgeglichen oder fett ist. Die Signale der Breitbandlambdasonde 12 werden einer Steuerung 13 zugeführt, die wiederum den Stellmotor 9 der Lufteinlaßdrossel 8 und das Stellventil 10 in der Abgasrückführung 4 ansteuert. Ferner erhält die Steuerung 13 weitere motorrelevante Werte, wie die Drehzahl n und einen Lastwert, beispielsweise von einem Fahrpedal 14.

Im Normalbetrieb der Brennkraftmaschine 1 ist die Drosselklappe 8 voll geöffnet und (bei einer Abgastemperatur ca. ≥ 150 °C) der NOx-Speicher 7 speichert im wesentlichen NO₂ ein, das in den Abgasen der Brennkraftmaschine 1 vorliegt bzw. in dem Konverter 5 durch Oxidation von NO aus dem Abgas erhalten wurde. Während des Betriebs der Brennkraftmaschine unter den ersten Betriebsbedingungen (lean) werden von der Steuerung 13 über ein Kennfeld und die eingehenden Motordaten die Stickoxidwerte des Abgasstroms und damit eine Stickoxidbelegung des NOx-Speichers 7 ermittelt. Bei Eintreten einer der Bedingungen Schub, Leerlauf oder unterer Teillastbereich und Erreichen einer ca. 20-%igen (bei Schub oder Leerlauf) und ca. 50-%igen (beim unteren Teillastbereich) Belegung des NOx-Speichers 7 mit NO₂ erfolgt über die Steuerung 13 eine Regeneration des NOx-Speichers 7. Hierzu wird die Drosselklappe 8 teilweise geschlossen, so daß die Frischluftzufuhr zu dem Lufteinlaß 11 stark verringert ist. Gleichzeitig wird das Stellventil 10 geöffnet, so daß eine hohe Abgasrückführungsrate erreicht wird. Hierdurch wird erreicht, daß die Brennkraftmaschine mit einem Luftunterschuß (fett) fährt, wofür ggf. auch die Kraftstoffeinspritzmenge in den Brennraum der Brennkraftmaschine 1 erhöht werden kann.

Die in der Regenerationsphase (zweiten Betriebsbedingungen) ggf. noch im Abgasstrom vorliegenden Sauerstoffreste werden an dem Konverter 5 mit den in dem Abgasstrom vorliegenden HC- und CO-Emissionen umgesetzt, so daß am Eingang des NOx-Speichers 7 (kontrolliert über die Breitbandlambdasonde 12) ein sauerstoffreies Abgas zur Verfügung steht. Insbesondere mit den in dem Abgasstrom noch vorliegenden CO-Emissionen, aber auch mittels der HC-Reste, werden die im NOx-Speicher 7 eingelagerten Stickoxide auf dem Edelmetall des NOx-Speichers umgesetzt. Nach wenigen Sekunden ist der NOx-Speicher 7 regeneriert, so daß die Steuerung 13 die Drosselklappe 8 und das Stellventil 10 wieder in die Position für die ersten Betriebsbedingungen zurückstellt.

Durch die Erhöhung der EGR wird erreicht, daß keine Überhitzung der Abgase der Brennkraftmaschine stattfindet, wodurch zum einen der Konverter 5 und der NOx-Speicher 7 geschont werden und zum anderen eine verringerte Kraftstoffmenge für die Regeneration des NOx-Speichers 7 notwendig ist.

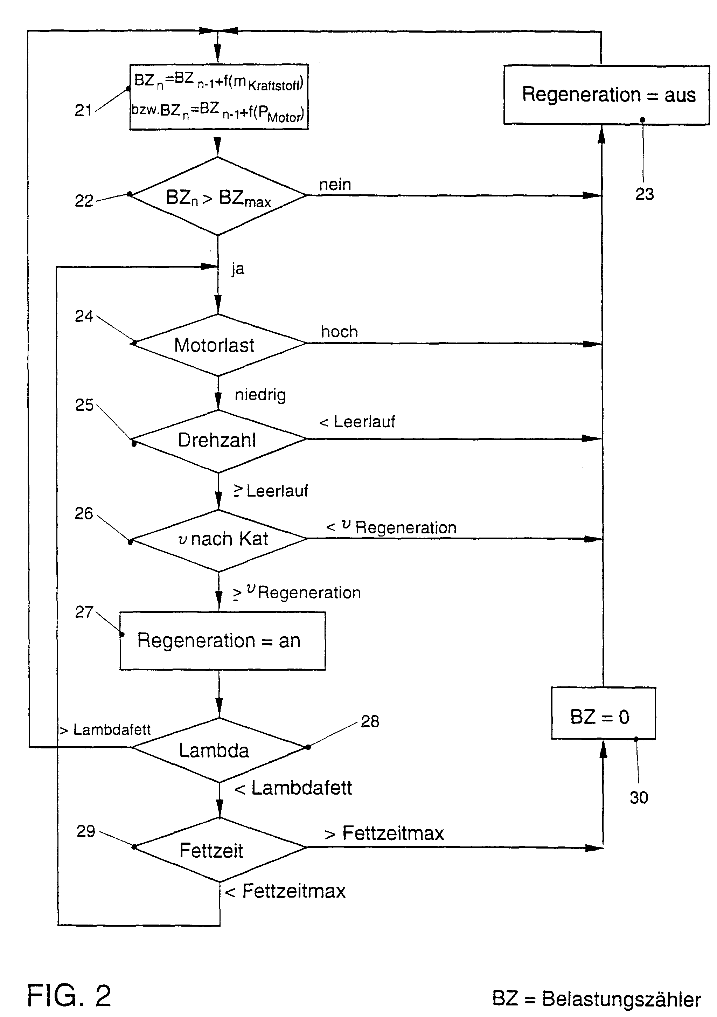

Der oben beschriebene Regenerationsablauf ist in der Figur 2 näher ausgeführt. Die Entscheidung, wann eine Regeneration einzuleiten ist, richtet sich im wesentlichen nach den Parametern
- NOx-Beladung des Speichers,
- Betriebszustand des Motors,
- Temperatur des NOx-Speichers.

Nach einer Speicherregeneration wird zunächst ein Beladungszähler 21 auf Null (30) gesetzt. Die NOx-Wiederbeladung des entleerten NOx-Speichers 7 kann durch das Differenzsignal je eines NOx-Sensors vor und hinter dem NOx-Speicher direkt erfaßt werden oder indirekt, dafür weniger aufwendig, näherungsweise durch Auswertung der Motorbetriebsdaten. Gemäß der EP 0 560 991 kann der Beladungszustand auch aus den kumulierten Motorumdrehungen seit der letzten Regeneration abgeleitet werden, vorteilhaft ist jedoch die Erfassung der kumulierten Motorleistung, die ihrerseits aus der Gaspedalstellung und der Motordrehzahl n ermittelt werden kann. Etwas weniger genau ist auch die Aufsummierung der seit der letzten Regeneration vom Motor verbrauchten Kraftstoffmenge möglich. Da die NOx-Einlagerungsrate des NOx-Speichers im wesentlichen auch durch die Speichertemperatur, die über einen Temperaturfühler im Abgasstrom oder im Speicher oder auch durch ein Kennfeld ermittelt werden kann, und die Raumgeschwindigkeit, die sich näherungsweise aus der Drehzahl und der eingespritzten Kraftstoffmenge errechnen läßt, bestimmt wird, sind diese Werte bei der Berechnung der NOx-Speicherbeladung mitzuberücksichtigen. Eine Abweichung von bis zu ± 30 % von der tatsächlichen Gesamtbeladung ist hierbei tolerierbar, da die Einlagerungsfähigkeit des NOx-Speichers mit zunehmender Gesamtbeladung zunächst nur wenig abnimmt und eine Regeneration eines nur ca. ¾-vollen Speichers keine wesentlichen Nachteile mit sich bringt.

Durch Abfrage 22 des Beladungszustandes BZ des NOx-Speichers wird bei einem geringen Beladungszustand weiterhin im ersten Betriebszustand "Regeneration = aus" 23 verfahren. Erst wenn ein vorgegebener maximaler Beladungszustand überschritten ist, wird die Motorlast 24 abgefragt. Wenn hierbei eine Nullstellung des Fahrpedals 14 erkannt wird, wird als nächstes die Drehzahl 25 abgefragt. Sofern eine Motorlast vorliegt, wird die Schleife über "Regeneration = aus" 23 und die Abfrage des Beladungszustands 22 erneut gefahren, wobei mit zunehmender Beladung des NOx-Speichers 7 auch eine zunehmende Motorlast als "niedrig" eingestuft wird, so daß ein voller Speicher 7 auch bei einer höheren Motorlast regeneriert wird. Diese Abfrage wird durchgeführt, da mit der Regeneration, beispielsweise durch eine Androsselung der Luftzufuhr, der Erhöhung der EGR-Rate und/oder eine höhere Einspritzmenge, ein Leistungseinbruch der Brennkraftmaschine 1 einhergeht. Deswegen soll die Regeneration möglichst bereits bei bis zu mittleren Teillasten durchgeführt werden.

Mit der Drehzahlabfrage 25 soll ein Absterben des Motors bei einer Drehzahl kleiner der Leerlaufdrehzahl verhindert werden. Sofern auch die Drehzahl n des Motors 1 genügend hoch ist, wird zur Temperaturabfrage 26 weitergeschaltet. Da die Speicherregeneration auf eine Temperatur angewiesen ist, bei der CO mit NO₂ an dem Edelmetall des Speichers reagiert, soll die Speichertemperatur oberhalb dieser Reaktionsschwelle von ca. 180 °C liegen. Je nach Speichermaterial kann die Mindesttemperatur auch einen anderen Wert haben.

Sind alle genannten Kriterien erfüllt, wird die Regeneration durch Drosseln 8 und/oder durch Öffnen des EGR-Ventils 10 und/oder durch Anheben der Einspritzmenge eingeleitet 27. Gleichzeitig erfolgt über die Lambdasonde 12 eine Abfrage 28, ob das Abgas fett ist, wofür noch eine gewisse Zeit vergeht. Solange die Abfrage 28 ein Lambda oberhalb "fett" ergibt, erfolgt eine weitere Aufsummierung der NOx-Werte des Abgas bei 21 mit einer entsprechenden Abfragefolge. Wird das Abgas an der Lambdasonde 12 als "fett" erkannt kann von einer Regeneration des Speichers 7 ausgegangen werden. Die Regeneration kann bei Unterschreiten einer als "sicher fett" geltenden Lambdaschwelle nach Verstreichen einer Regenerationszeit 29 beendet werden, vor Ablauf der Fettzeit wird der Abfragezyklus bei der Motorlast 24 beginnend wiederholt. Nach Ablauf der Fettzeit wird der Beladungszähler 21 wieder auf Null 30 gesetzt.

Ein sicheres Erkennen eines fetten Abgases liegt bei Lambda ca. ≤ 0,9, möglich sind Werte < 1,05 bis hin zu 0,6. Für die Errechnung der Regenerationszeit ist die Beladung des Speichers und das Reduktionsmittelangebot entscheidend. Bei der Speicherregeneration im Fetten ist CO die Hauptreduktionskomponente, wobei für die Umsetzung von 1 mol NO₂ 2 mol CO erforderlich sind entsprechend 1,22 g CO pro Gramm eingelagertes NO₂.

Abhängig vom CO-Angebot des auf ein kleines Lambda gedrosselten Motors läßt sich somit die erforderliche Mindestregenerationszeit (Fettzeit max.) errechnen. Mit steigender Androsselung nimmt auch das CO-Angebot des Motors zu und die Mindestregenerationszeit ab. Die Mindestregenerationszeit kann zur Gewährleistung einer vollständigen Speicherentleerung noch um vorzugsweise bis zu 50 %, vorteilhaft um 20 % bis 40 % und insbesondere ca. 30 % nach oben korrigiert werden. Je nach verwendeter Brennkraftmaschine und dem im Abgas vorliegenden Reduktionsmittelprofil (HC, CO, H₂), der Speichertemperatur, der Raumgeschwindigkeit, dem Speichermedium, dem Washcoat, den Anströmverhältnissen und dem Katalysatorvolumen kann ein Zeit-Korrekturfaktor - 50 % bis + 300 % betragen. Der Zeitkorrekturfaktor ist entsprechend experimentell zu ermitteln.

Vorzugsweise kann bei den Abfragen eine Hysterese aufgesetzt sein, um ein häufiges Hinund Herschalten zwischen den Zuständen "Regeneration an" und "Regeneration aus" zu vermeiden. Die Hysterese kann vorteilhaft bei der Motorlast, der Drehzahl und der Speichertemperatur vorliegen. Das Maß der Überschneidung richtet sich hier wiederum nach den vorliegenden Fahrzeugkonfigurationen und kann vorteilhaft beispielsweise ± 5 % vom Sollwert betragen, wobei bis zu ± 30 % möglich sind.

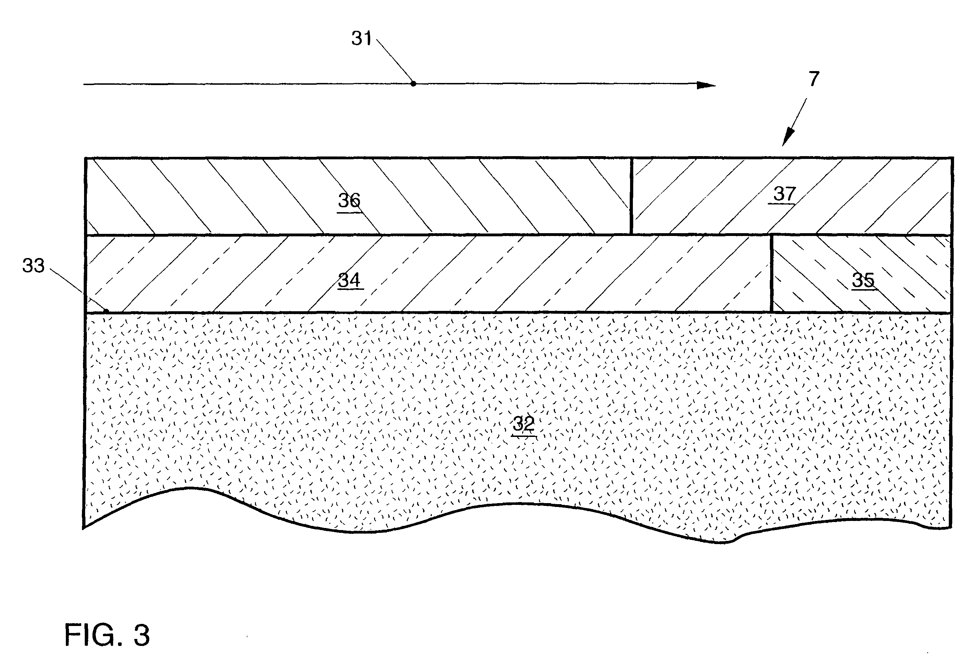

Der in der Figur 3 näher dargestellte NOx-Speicherkatalysator 7 ist ein Dreizonenkatalysator, dessen Beschichtung als Prinzipskizze eines Schnitts durch einen Strömungskanal dargestellt ist. Der Pfeil 31 zeigt die Strömungsrichtung des Abgases an.

Aufgebaut ist der NOx-Speicher 7 auf dem wabenförmigen Keramikträger 32, auf dessen Oberfläche 33 ein vorderes Washcoat 34 und ein hinteres Washcoat 35 aufgebracht sind. Das vordere Washcoat 34 enthält im wesentlichen γ-Aluminiumoxid, wie es in der DE 195 22 913 A, Spalte 6, Zeilen 41 - 46 beispielsweise beschrieben ist. Die hintere Washcoatschicht 35 ist entsprechend aufgebaut, enthält jedoch noch zusätzlich Cer (als Ceroxid) wobei der Ceranteil vorteilhaft mindestens 0,04 g/l (1 g/ft³) beträgt und insbesondere im Bereich 0,11 g/l (3 g/ft³) bis 0,28 g g/l (8 g/ft³) liegt. Durch den Einsatz des Konverters 5 kann der Speicherkatalysator 7 in einem vorderen Bereich 36 ohne eine Edelmetallbeschichtung ausgebildet sein bzw. die Edelmetallbeschichtung kann niedrig gewählt werden, beispielsweise bis 1,4 g/l (40 g/ft³) und insbesondere bis 0,7 g/l (20 g/ft³). Hierdurch ist die Chemiesorptionsrate des NOx-Speichers erhöht. Für die Absorption von NOx, insbesondere NO₂, enthält der Washcoat 34 über dem vorderen Abschnitt 36 (der nur zeichnerisch auf dem Washcoat 34 liegt, tatsächlich aber in diesem enthalten ist) Barium, Lanthan und Natrium, die bei der Beladung des NOx-Speichers 7 mit dem NO₂ des Abgases die entsprechenden Nitrate bilden und unter den zweiten Betriebsbedingungen in die entsprechenden Oxide zurückgewandelt werden

Im hinteren Bereich des NOx-Speichers 7 ist auf die Washcoatschichten 34 und 35 eine Edelmetallbeschichtung 37 aufgebracht, die einer üblichen Drei-Wege-Katalysator-Beschichtung entspricht. Das Edelmetall hat hierbei einen üblichen Partikeldurchmesser. Als Edelmetall kommt insbesondere Platin oder dessen Mischung mit mindestens einem der Elemente Rhodium und Palladium zum Einsatz. Die Edelmetallbeschichtung 37 liegt vorteilhaft im Bereich 1.1 g/l (30 g/ft³) bis 3.5 g/l (100 g/ft³), im vorliegenden Fall bei 1.6 g/l (46 g/ft³).

Durch den beschriebenen Aufbau ergeben sich auf dem NOx-Speicher 7 drei Zonen:
- vorne: NOx-Speichermaterial plus normaler Washcoat;
- in der Mitte: Edelmetall plus normaler Washcoat;
- hinten: Edelmetall plus sauerstoffspeichernder Washcoat.

Durch den sauerstoffspeichernden Washcoat wird erreicht, daß nicht mit NOx umgesetzte CO- und HC-Restmengen, die während den zweiten Betriebsbedingungen mit Abgas in den NOx-Speicher 7 strömen und an sich der Reduktion des NOx dienen, um dabei selbst zu CO₂ und Wasser zu reagieren, mit dem in der Schicht 35 gespeicherten Sauerstoff oxidiert werden, so daß CO- und HC-Durchschläge bei der Regeneration weitgehend vermieden werden.

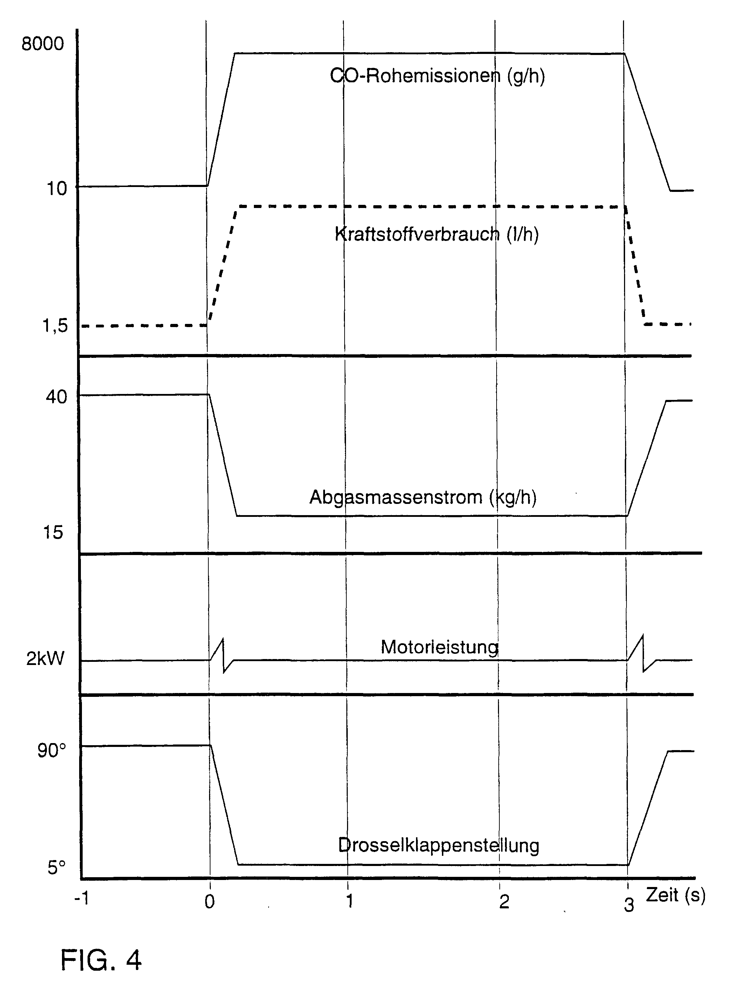

Die Figur 4 zeigt die einzelnen Zusammenhänge an der Dieselbrennkraftmaschine 1 beim Wechsel zwischen den beiden Betriebsbedingungen. Bis zur Zeit 0 und nach der Zeit 3 s liegen die ersten Betriebsbedingungen vor, deren Zeitdauer üblicherweise im Bereich 30 s bis 2 000 s liegt. Beim Umschalten auf die zweiten Betriebsbedingungen im Bereich 0 s bis 3 s wird die Drosselklappe 8 von ihrer Offenstellung (90°) auf ca. 5°, d. h. beinahe vollständig geschlossen. Gleichzeitig erfolgt eine Anhebung der Kraftstoffeinspritzung von 1,5 l/h auf 10 l/h, wodurch bei einer in etwa unveränderten Motorleistung von ca. 2 kW die CO-Rohemissionen von 10 g/h auf 8 000 g/h gesteigert wird. Gleichzeitig sinkt der Abgasmassenstrom von 40 kg/h auf 15 kg/h.

## Patentansprüche

1. Abgasreinigungsverfahren bei einer Brennkraftmaschine, bei dem die Abgase der Brennkraftmaschine (1) einem NOx-Speicher (7) zugeführt werden, der geeignet ist, unter ersten Betriebsbedingungen NOx aus dem zugeführten Abgas zu speichern und aus dem unter zweiten Betriebsbedingungen das gespeicherte NOx zur Reduktion desselben wieder freigesetzt wird, **dadurch gekennzeichnet, daß** die Abgase in Strömungsrichtung über mindestens drei unterschiedliche Behandlungszonen geführt werden, von denen eine zuerst durchströmte erste Zone (34+36) den NOx-Speicher und wenig oder gar kein Edelmetall aufweist, eine danach durchströmte zweite Zone (34+37) keine oder eine geringere NOx-Speicherkapazität und mehr Edelmetall als die erste Zone (34+36) aufweist, und eine noch später durchströmte dritte Zone (35+37) einen Sauerstoffspeicher mit einer Edelmetallbeschichtung aufweist.

2. Verfahren nach Anspruch 1, **dadurch gekennzeichnet, daß** die zweite Zone (37+34) eine geringere Sauerstoffkapazität als die dritte Zone (37+35) enthält.

3. Verfahren nach Anspruch 1, **dadurch gekennzeichnet, daß** vor der zweiten Zone (34+37) das Abgas eine weitere Zone durchströmt, die einen NOx-Speicher und mehr Edelmetall als die erste Zone enthält.

4. Verfahren nach einem der vorhergehenden Ansprüche, **dadurch gekennzeichnet, daß** mehrere der unterschiedlichen zonal begrenzten Abgasbehandlungen an einem Trägerkörper (32) erfolgen.

5. Verfahren nach einem der vorhergehenden Ansprüche, **dadurch gekennzeichnet, daß** die zweiten Betriebsbedingungen gezielt bei einer niedrigen Belastung und/oder in Schubphasen und/oder in Leerlaufphasen der Brennkraftmaschine eingestellt werden.

6. Verfahren nach einem der vorhergehenden Ansprüche, **dadurch gekennzeichnet, daß** die durchschnittliche Zeitdauer der ersten Betriebsbedingungen ein Vielfaches der durchschnittlichen Zeitdauer der zweiten Betriebsbedingungen beträgt.

7. Verfahren nach einem der vorhergehenden Ansprüche, **dadurch gekennzeichnet, daß** die zweiten Betriebsbedingungen NOxspeicherbeladungsgesteuert ablaufen.

8. Verfahren nach einem der vorhergehenden Ansprüche, **dadurch gekennzeichnet, daß** die zweiten Betriebsbedingungen nur bei einer Mindestbeladung des NOx-Speichers eingestellt werden.

9. Verfahren nach einem der vorhergehenden Ansprüche, **dadurch gekennzeichnet, daß** über eine Abgasrückführung ein Teilstrom der Abgase dem Luftansaugtrakt der Brennkraftmaschine zugeführt wird unter Bildung eines Abgasteilstrom/Ansaugluft-Verhältnisses unter den ersten Betriebsbedingungen, und daß das Abgasteilstrom/Ansaugluft-Verhältnis unter den zweiten Betriebsbedingungen vergrößert wird.

10. Verfahren nach Anspruch 9, **dadurch gekennzeichnet, daß** die Vergrößerung des Abgasteilstrom/Ansaugluft-Verhältnisses nur in einem unteren Teillastbereich der Brennkraftmaschine erfolgt.

11. Verfahren nach einem der vorhergehenden Ansprüche, **dadurch gekennzeichnet, daß** unter den zweiten Betriebsbedingungen die Verbrennungsluftzufuhr zu der Brennkraftmaschine vermindert wird.

12. Verfahren nach einem der vorhergehenden Ansprüche, **dadurch gekennzeichnet, daß** die Brennkraftmaschine eine Kraftstoffdirekteinspritzung besitzt.

13. Verfahren nach einem der vorhergehenden Ansprüche, **dadurch gekennzeichnet, daß** die Brennkraftmaschine eine Dieselbrennkraftmaschine ist.

14. Verfahren nach einem der vorhergehenden Ansprüche, **dadurch gekennzeichnet, daß** das Abgas, bevor es dem edelmetallarmen oder -freien NOx-Speicherbereich unter den ersten Betriebsbedingungen zugeführt wird, durch einen Konverter (5) geleitet wird, in dem ein in den Abgasen vorliegendes NO₂/NO-Verhältnis vergrößert wird und/oder in dem bei einer Temperatur ≥ 230 °C mindestens 50 % des im Abgas enthaltenden und mit dem Abgas in den Konverter geführten NO zu NO₂ umgesetzt wird.

15. Verfahren nach einem der vorhergehenden Ansprüche, **dadurch gekennzeichnet, daß** die Reduktion des gespeicherten NOx bei einem λ ≤ 1,05 erfolgt.

16. Verfahren nach einem der vorhergehenden Ansprüche, **dadurch gekennzeichnet, daß** der NOx-Speicher ein Aluminiumoxid, insbesondere γ-Aluminiumoxid enthält.

17. Verfahren nach einem der vorhergehenden Ansprüche, **dadurch gekennzeichnet, daß** der NOx-Speicher ein Element aus der Gruppe der Alkalimetalle, Erdalkalimetalle, seltenen Erden, Lanthan, Titan, Kupfer und/oder Mangan enthält.

18. Verfahren nach einem der vorhergehenden Ansprüche, **dadurch gekennzeichnet, daß** der NOx-Speicher NOx und SOx aus dem Abgas bei Sauerstoffüberschuß absorbiert.

19. Verfahren nach einem der vorhergehenden Ansprüche, **dadurch gekennzeichnet, daß** der NOx-Speicher NOx und/oder SOx in einer reduzierten Atmosphäre und/oder bei niedriger Sauerstoffkonzentration freisetzt.

20. Verfahren nach Anspruch 18 und/oder 19, **dadurch gekennzeichnet, daß** eine Sauerstoffkonzentrations-Bestimmungseinrichtung, die die Sauerstoffkonzentration bzw. eine die Sauerstoffkonzentration enthaltende Größe ermittelt, vorgesehen ist, die die Sauerstoffkonzentration bzw. die diese enthaltende Größe als eine Eingangsgröße an die Steuerung gibt, die die ersten oder zweiten Betriebsbedingungen einstellt.

21. Verfahren nach einem der vorhergehenden Ansprüche, **dadurch gekennzeichnet, daß** der NOx-Speicher NOx und/oder SOx bei erhöhter Temperatur freisetzt.

22. Verfahren nach Anspruch 21, **gekennzeichnet durch** eine Temperatur-Bestimmungseinrichtung, die die Temperatur bzw. eine die Temperatur enthaltende Größe des Gasstroms und/oder des NOx-Speichers ermittelt und die die Temperatur bzw. die diese enthaltende Größe als Eingangsgröße an die Steuerung gibt, die die ersten oder zweiten Betriebsbedingungen einstellt.

23. Verfahren nach Anspruch 20 und 22, **dadurch gekennzeichnet, daß** die Steuerung die Sauerstoffkonzentration und die Temperatur bzw. die diese enthaltenden Größen als Eingangsgrößen hat.

24. Vorrichtung (7) zur Reinigung des Abgases einer magerbetreibbaren Brennkraftmaschine (1) eines Kraftfahrzeugs mit einem NOx-Speicherkatalysator (7), wobei die Abgase dem NOx-Speicherkatalysator (7) zugeführt werden, der unter ersten Betriebsbedingungen NOx aus dem zugeführten Abgas speichert und aus dem unter zweiten Betriebsbedingungen das gespeicherte NOx zur Reduktion desselben wieder freigesetzt wird, **dadurch gekennzeichnet, daß** der NOx-Speicherkatalysator (7) in Abgasströmungsrichtung drei funktionale Zonen aufweist, wobei die erste Zone (34+36) durch einen NOx-Speicher ohne oder mit nur geringer Edelmetallbeschichtung, die zweite Zone (34+37) durch einen Edelmetalkatalysator ohne oder mit nur geringer NOx-Speicherfähigkeit und die dritte Zone (37+35) durch einen Edelmetallkatalysator mit einer Sauerstoffspeicherfunktion gebildet werden.

25. Vorrichtung nach Anspruch 24, **dadurch gekennzeichnet, daß** in Strömungsrichtung vor der ersten Zone (34+36) eine weitere funktionale Zone, nämlich ein NO zu NO2-Konverter (5), angeordnet ist.

26. Vorrichtung nach einem der Ansprüche 24 und 25, **dadurch gekennzeichnet, daß** die funktionalen Zonen auf einem Träger (32) angeordnet sind.

27. Brennkraftmaschine mit einer Vorrichtung zur Reinigung des Abgases nach einem der Ansprüche 24 bis 26, **dadurch gekennzeichnet, daß** vor dem Lufteinlaß der Brennkraftmaschine(1), insbesondere stromaufwärts der Einmündung der Abgasrückführung (4), eine Drossel (8) angeordnet ist, mittels der eine zu dem Lufteinlaß der Brennkraftmaschine (1) strömende Luftmenge veränderbar ist.

28. Brennkraftmaschine nach Anspruch 27, **dadurch gekennzeichnet, daß** zwischen dem NOx-Speicherkatalysator (7) und einem Abgasauslaß der Brennkraftmaschine (1) ein Konverter (5) angeordnet ist, der ein Gesamtvolumen im Bereich von 10 bis 25 % des Hubraums der Brennkraftmaschine hat, und daß der Konverter mit mindestens 2.1 g/l (60 g/ft³) Platin belegt ist.

29. Brennkraftmaschine nach einem der Ansprüche 27 bis 28, **dadurch gekennzeichnet, daß** die Brennkraftmaschine (1) ein Direkteinspritzer ist.

30. Brennkraftmaschine nach einem der Ansprüche 27 bis 29, **dadurch gekennzeichnet, daß** die Brennkraftmaschine (1) eine Dieselbrennkraftmaschine ist.

## Claims

1. Exhaust-gas cleaning method in an internal-combustion engine, in which the exhaust gases from the internal-combustion engine (1) are fed to an NOx store (7) which is suitable for storing NOx from the supplied exhaust gas under first operating conditions and for releasing the stored NOx again, in order for it to be reduced, under second operating conditions, **characterized in that** the exhaust gases, as seen in the direction of flow, are guided over at least three different treatment zones, of which a first zone (34+36), through which the exhaust gases flow first, includes the NOx store and little or no precious metal, a second zone (34+37), through which the exhaust gases then flow, has no NOx storage capacity or a lower NOx storage capacity and more precious metal than the first zone (34+36), and a third zone (35+37), through which the exhaust gases flow at an even later stage, includes an oxygen store with a precious-metal coating.

2. Method according to Claim 1, **characterized in that** the second zone (37+34) has a lower oxygen capacity than the third zone (37+35).

3. Method according to Claim 1, **characterized in that** before the second zone (34+37), the exhaust gas flows through a further zone, which includes an NOx store and more precious metal than the first zone.

4. Method according to one of the preceding claims, **characterized in that** several of the different, zonally limited exhaust-gas treatments take place on a support body (32).

5. Method according to one of the preceding claims, **characterized in that** the second operating conditions are deliberately set when the internal-combustion engine is operating at a low load and/or in overrun phases and/or in idling phases.

6. Method according to one of the preceding claims, **characterized in that** the mean duration of the first operating conditions is a multiple of the mean duration of the second operating conditions.

7. Method according to one of the preceding claims, **characterized in that** the second operating conditions proceed under NOx-store load control.

8. Method according to one of the preceding claims, **characterized in that** the second operating conditions are set only at a minimum load of the NOx store.

9. Method according to one of the preceding claims, **characterized in that** by means of exhaust-gas recirculation, a partial stream of the exhaust gases is fed to the air intake section of the internal-combustion engine, so as to form an exhaust-gas partial stream/intake air ratio under the first operating conditions, and **in that** the exhaust-gas partial stream/intake air ratio is increased under the second operating conditions.

10. Method according to Claim 9, **characterized in that** the increase in the exhaust-gas partial stream/intake air ratio takes place only in a lower partial-load range of the internal-combustion engine.

11. Method according to one of the preceding claims, **characterized in that** under the second operating conditions the supply of combustion air to the internal-combustion engine is reduced.

12. Method according to one of the preceding claims, **characterized in that** the internal-combustion engine has a direct fuel injection.

13. Method according to one of the preceding claims, **characterized in that** the internal-combustion engine is a diesel engine.

14. Method according to one of the preceding claims, **characterized in that** the exhaust gas, before it is fed to the NOx storage area, which contains little or no precious metal, under the first operating conditions, is passed through a converter (5), in which an NO₂/NO ratio which is present in the exhaust gases is increased and/or in which, at a temperature of ≥ 230°C, at least 50% of the NO which is contained in the exhaust gas and is passed into the converter together with the exhaust gas is converted into NO₂.

15. Method according to one of the preceding claims, **characterized in that** the reduction of the stored NOx takes place at a λ ≤ 1.05.

16. Method according to one of the preceding claims, **characterized in that** the NOx store contains an aluminium oxide, in particular γ-aluminium oxide.

17. Method according to one of the preceding claims, **characterized in that** the NOx store contains an element selected from the group consisting of the alkali metals, the alkaline-earth metals, the rare earths, lanthanum, titanium, copper and/or manganese.

18. Method according to one of the preceding claims, **characterized in that** the NOx store absorbs NOx and SOx from the exhaust gas when there is an excess of oxygen.

19. Method according to one of the preceding claims, **characterized in that** the NOx store releases NOx and/or SOx in a reducing atmosphere and/or at a low oxygen concentration.

20. Method according to Claim 18 and/or 19,
**characterized in that** an oxygen-concentration determination device, which determines the oxygen concentration or a variable which includes the oxygen concentration, is provided, which device transmits the oxygen concentration or the variable which includes this concentration as an input variable to the control unit, which sets the first or second operating conditions.

21. Method according to one of the preceding claims, **characterized in that** the NOx store releases NOx and/or SOx at elevated temperature.

22. Method according to Claim 21, **characterized by** a temperature-determination device, which determines the temperature or a variable which includes the temperature for the gas stream and/or the NOx store and transmits the temperature or the variable which includes the temperature as an input variable to the control unit, which sets the first or second operating conditions.

23. Method according to Claims 20 and 22,
**characterized in that** the control unit has as input variables the oxygen concentration and the temperature or the variables which include these parameters.

24. Device (7) for gleaning the exhaust gas from an internal-combustion engine (1) of a motor vehicle which can be operated under lean-burn conditions, the device having an NOx storage catalytic converter (7), the exhaust gases being fed to the NOx storage catalytic converter (7) which stores NOx from the supplied exhaust gas under first operating conditions and from which the stored NOx is released again, in order to be reduced, under second operating conditions, **characterized in that**, as seen in the direction of flow of the exhaust gas, the NOx storage catalytic converter (7) has three functional zones, the first zone (34+36) being formed by an NOx store without a precious-metal coating or with only a slight coating of precious metal, the second zone (34+37) being formed by a precious-metal catalytic converter without the ability to store NOx or with only a slight ability to store NOx, and the third zone (37+35) being formed by a precious-metal catalytic converter with an oxygen storage function.

25. Device according to Claim 24, **characterized in that** a further functional zone, namely an NO to NO₂ converter (5), is arranged upstream of the first zone (34+36), as seen in the direction of flow.

26. Device according to one of Claims 24 and 25, **characterized in that** the functional zones are arranged on a support (32).

27. Internal-combustion engine having a device for cleaning the exhaust gas according to one of Claims 24 to 26, **characterized in that** a restrictor (8) is arranged in front of the air inlet of the internal-combustion engine (1), in particular upstream of the opening of the exhaust-gas recirculation (4), by means of which restrictor it is possible to vary a quantity of air flowing to the air inlet of the internal-combustion engine (1).

28. Internal-combustion engine according to Claim 27, **characterized in that** a converter (5), which has a total volume which lies within the range from 10 to 25% of the piston displacement of the internal-combustion engine, is arranged between the NOx storage catalytic converter (7) and an exhaust-gas outlet of the internal-combustion engine (1), and **in that** the converter is covered with at least 2.1 g/l (60 g/ft³) of platinum.

29. Internal-combustion engine according to one of Claims 27 to 28, **characterized in that** the internal-combustion engine (1) is a direct injection engine.

30. Internal-combustion engine according to one of Claims 27 to 29, **characterized in that** the internal-combustion engine (1) is a diesel engine.

## Revendications

1. Procédé de purification de gaz d'échappement pour un moteur à combustion interne, dans lequel les gaz d'échappement du moteur à combustion interne (1) sont introduits dans un accumulateur de NOₓ (7), qui convient pour accumuler le NOₓ du gaz d'échappement introduit dans des premières conditions de fonctionnement et à partir duquel, dans les deuxièmes conditions de fonctionnement, le NOₓ accumulé est à nouveau libéré pour la réduction de celui-ci, **caractérisé en ce que** les gaz d'échappement, dans le sens de l'écoulement, sont conduits sur au moins trois zones de traitement différentes, dont une première zone traversée d'abord (34+36) présente l'accumulateur de NOₓ et peu ou pas de métal précieux, dont une deuxième zone traversée ensuite (34+37) ne présente pas de capacité d'accumulation de NOₓ ou une capacité plus faible et plus de métal précieux que la première zone (34+36) et dont une troisième zone traversée encore après (35+37) présente un accumulateur d'oxygène présentant un revêtement en métal précieux.

2. Procédé selon la revendication 1, **caractérisé en ce que** la deuxième zone (37+34) présente une capacité d'oxygène plus faible que la troisième zone (37+35).

3. Procédé selon la revendication 1, **caractérisé en ce que** le gaz d'échappement traverse une autre zone en amont de la deuxième zone (34+37), qui contient un accumulateur de NOₓ et plus de métal précieux que la première zone.

4. Procédé selon l'une quelconque des revendications précédentes, **caractérisé en ce que** plusieurs des différents traitements de gaz d'échappement, délimités en zone sont réalisés sur un corps support (32).

5. Procédé selon l'une quelconque des revendications précédentes, **caractérisé en ce que** les deuxièmes conditions de fonctionnement sont réglées de manière ciblée à une faible charge et/ou dans des phases de poussée et/ou dans des phases de fonctionnement à vide du moteur à combustion interne.

6. Procédé selon l'une quelconque des revendications précédentes, **caractérisé en ce que** la durée moyenne des premières conditions de fonctionnement représente un multiple de la durée moyenne des deuxièmes conditions de fonctionnement.

7. Procédé selon l'une quelconque des revendications précédentes, **caractérisé en ce que** les deuxièmes conditions de fonctionnement se déroulent de manière réglée par la charge de l'accumulateur de NOₓ.

8. Procédé selon l'une quelconque des revendications précédentes, **caractérisé en ce que** les deuxièmes conditions de fonctionnement ne sont réglées qu'à une charge minimale de l'accumulateur de NOₓ.

9. Procédé selon l'une quelconque des revendications précédentes, **caractérisé en ce qu'**un flux partiel des gaz d'échappement est introduit via un retour de gaz d'échappement dans la conduite d'aspiration de l'air du moteur à combustion interne avec formation d'un rapport flux partiel de gaz d'échappement/air d'aspiration dans les premières conditions de fonctionnement et **en ce que** le rapport flux partiel de gaz d'échappement/air d'aspiration est augmenté dans les deuxièmes conditions de fonctionnement.

10. Procédé selon la revendication 9, **caractérisé en ce que** l'augmentation du rapport flux partiel de gaz d'échappement/air d'aspiration n'est réalisé que dans une zone de charge partielle inférieure du moteur à combustion interne.

11. Procédé selon l'une quelconque des revendications précédentes, **caractérisé en ce que** dans les deuxièmes conditions de fonctionnement, l'alimentation en air de combustion du moteur à combustion interne est diminuée.

12. Procédé selon l'une quelconque des revendications précédentes, **caractérisé en ce que** le moteur à combustion interne présente une injection directe de carburant.

13. Procédé selon l'une quelconque des revendications précédentes, **caractérisé en ce que** le moteur à combustion interne est un moteur diesel à combustion interne.

14. Procédé selon l'une quelconque des revendications précédentes, **caractérisé en ce que** le gaz d'échappement, avant qu'il soit introduit dans la zone d'accumulation de NOₓ pauvre en ou exempte de métal précieux dans les premières conditions de fonctionnement, est guidé à travers un convertisseur (5) dans lequel un rapport NO₂/NO existant dans les gaz d'échappement est augmenté et/ou dans lequel, à une température ≥230°C, au moins 50% du NO contenu dans le gaz d'échappement et amené avec le gaz d'échappement dans le convertisseur est converti en NO₂.

15. Procédé selon l'une quelconque des revendications précédentes, **caractérisé en ce que** la réduction du NOₓ accumulé est réalisée à un λ ≤ 1,05.

16. Procédé selon l'une quelconque des revendications précédentes, **caractérisé en ce que** l'accumulateur de NOₓ contient un oxyde d'aluminium, en particulier du γ-oxyde d'aluminium.

17. Procédé selon l'une quelconque des revendications précédentes, **caractérisé en ce que** l'accumulateur de NOₓ contient un élément du groupe des métaux alcalins, des métaux alcalino-terreux, des terres rares, du lanthane, du titane, du cuivre et/ou du manganèse.

18. Procédé selon l'une quelconque des revendications précédentes, **caractérisé en ce que** l'accumulateur de NOₓ absorbe du NOₓ et du SOₓ du gaz d'échappement en présence d'un excès d'oxygène.

19. Procédé selon l'une quelconque des revendications précédentes, **caractérisé en ce que** l'accumulateur de NOₓ libère du NOₓ et/ou du SOₓ dans une atmosphère réduite et/ou à une faible concentration en oxygène.

20. Procédé selon les revendications 18 et/ou 19, **caractérisé en ce qu'**on a prévu un dispositif de détermination de la concentration en oxygène, qui détermine la concentration en oxygène ou, selon le cas, une grandeur contenant la concentration en oxygène, qui donne la concentration en oxygène ou, selon le cas, la grandeur contenant celle-ci comme valeur d'entrée au dispositif de commande, qui règle les premières ou deuxièmes conditions de fonctionnement.

21. Procédé selon l'une quelconque des revendications précédentes, **caractérisé en ce que** l'accumulateur de NOₓ libère du NOₓ et/ou du SOₓ à une température élevée.

22. Procédé selon la revendication 21,
**caractérisé par** un dispositif de détermination de la température, qui détermine la température ou, selon le cas, une grandeur contenant la température du flux de gaz et/ou de l'accumulateur de NOₓ et qui donne la température ou, selon le cas, la grandeur contenant celle-ci comme valeur d'entrée au dispositif de commande qui règle les premières ou deuxièmes conditions de fonctionnement.

23. Procédé selon les revendications 20 et 22, **caractérisé en ce que** le dispositif de commande dispose de la concentration en oxygène et de la température ou; selon le cas, des grandeurs les contenant comme valeurs d'entrée.

24. Dispositif (7) pour la purification du gaz d'échappement d'un moteur à combustion interne (1) pouvant fonctionner avec un mélange pauvre, d'un véhicule automobile présentant un catalyseur (7) à accumulation de NOₓ, les gaz d'échappements étant introduits dans le catalyseur (7) à accumulation de NOₓ, qui accumule dans les premières conditions de fonctionnement du NOₓ du gaz d'échappement introduit et qui libère à nouveau dans les deuxièmes conditions de fonctionnement le NOₓ accumulé pour la réduction de celui-ci, **caractérisé en ce que** le catalyseur (7) à accumulation de NOₓ présente dans le sens d'écoulement du gaz d'échappement trois zones fonctionnelles, dont la première zone (34+36) est formée par un accumulateur de NOₓ sans revêtement de métal précieux ou avec seulement un faible revêtement de métal précieux, la deuxième zone (34+37) est formée par un catalyseur de métal précieux sans capacité d'accumulation de NOₓ ou avec seulement une faible capacité d'accumulation de NOₓ et la troisième zone (37+35) est formée par un catalyseur de métal précieux présentant une fonction d'accumulation d'oxygène.

25. Dispositif selon la revendication 24, **caractérisé en ce qu'**une autre zone fonctionnelle, à savoir un convertisseur (5) de NO en NO₂, est disposée dans le sens d'écoulement en amont de la première zone (34+36).

26. Dispositif selon l'une quelconque des revendications 24 et 25, **caractérisé en ce que** les zones fonctionnelles sont disposées sur un support (32).

27. Moteur à combustion interne présentant un dispositif pour la purification du gaz d'échappement selon l'une quelconque des revendications 24 à 26, **caractérisé en ce qu'**un dispositif d'étranglement (8) est disposé en amont de l'entrée d'air du moteur à combustion interne (1), en particulier en amont du débouché du retour de gaz d'échappement (4), au moyen duquel un débit d'air s'écoulant vers l'entrée d'air du moteur à combustion interne (1) peut être modifié.

28. Moteur à combustion interne selon la revendication 27, **caractérisé en ce qu'**on a disposé entre le catalyseur (7) à accumulation de NOₓ et une sortie de gaz d'échappement du moteur à combustion interne (1) un convertisseur (5) qui présente un volume total dans la plage de 10 à 25% de la cylindrée du moteur à combustion interne et **en ce que** le convertisseur est revêtu d'au moins 2,1 g/l (60 g/pied³) de platine.

29. Moteur à combustion interne selon l'une quelconque des revendications 27 à 28, **caractérisé en ce que** le moteur à combustion interne (1) est à injection directe.

30. Moteur à combustion interne selon l'une quelconque des revendications 27 à 29, **caractérisé en ce que** le moteur à combustion interne (1) est un moteur diesel à combustion interne.
